# EUROPEAN PATENT APPLICATION

(11) **EP 4 714 686 A1**
(43) Date of publication of application: **25.03.2026**
(21) Application number: 23963035.3
(22) Date of filing: 26.12.2023
(51) Int. Cl.: B60C 23/04

(54) **TRANSMITTER, RECEIVER, TRANSMITTING AND RECEIVING SYSTEM, AND WHEEL POSITION DETERMINATION METHOD**

(71) Applicant: Pacific Industrial Co., Ltd., Ogaki-shi, Gifu 503-8603 (JP)
(72) Inventor: FUJII, Keiyu, Ogaki-shi, Gifu 503-8603 (JP); TSUJITA, Yasuhisa, Ogaki-shi, Gifu 503-8603 (JP)
(74) Representative: Daub, Thomas
(86) International application number: PCT/JP2023/046589
(87) International publication number: WO 2025/141679

(57) **Abstract**

A transmitter (31) is attached to each of wheel assemblies (11) of a vehicle (10). The transmitter (31) transmits transmission data to a receiver (50). The transmitter (31) includes a power source (38), a transmitter storage (37) configured to store identification information of the transmitter (31), and a transmitter control unit (35). The transmitter control unit (35) is configured to generate pre-transmission data in a predetermined frame format and to transmit, as the transmission data, data obtained by adding data that is not included in the frame format to specified bits of the pre-transmission data.

## Description

### TECHNICAL FIELD

The present disclosure relates to a transmitter, a receiver, a transmitting-receiving system, and a wheel position determination method.

### BACKGROUND ART

A tire air pressure monitoring system disclosed in Patent Literature 1 includes a transmitter and a receiver. The transmitter is arranged in a tire. The receiver is arranged on a vehicle body. The transmitter transmits transmission data to the receiver. The receiver receives the transmission data. The receiver monitors the air pressure.

### CITATION LIST

### Patent Literature

Patent Literature 1: JP2019-43333A

### SUMMARY OF INVENTION

### Technical Problem

When the amount of data included in the transmission data increases, the data length of the transmission data may increase. This may cause an increase in the electric energy consumption of the transmitter.

### Solution to Problem

In one general aspect, a transmitter attached to each of wheel assemblies of a vehicle is configured to transmit transmission data to a receiver. The transmitter includes a power source, a transmitter storage configured to store identification information of the transmitter, and a transmitter control unit. The transmitter control unit is configured to generate pre-transmission data in a predetermined frame format. The pre-transmission data being equal in data length to the transmission data, and the transmitter control unit is configured to transmit, as the transmission data, data obtained by adding data that is not included in the frame format to specified bits of the pre-transmission data.

The transmitter control unit transmits transmission data obtained by adding data that is not included in the frame format of the pre-transmission data, to the specified bits of the pre-transmission data. The receiver restores the data that is not included in the frame format from the transmission data. Thus, the data length of the transmission data is shorter than when transmitting the transmission data with the data that is not included in the frame format. Thus, electric energy consumption of the transmitter is not increased.

In accordance with the above transmitter, the data that is not included in the frame format is wheel position determination data used by the receiver to perform wheel position determination for determining which one of the wheel assemblies the transmitter is attached.

In accordance with the above transmitter, the specified bits correspond to an error detection code or an error correction code.

In accordance with the above transmitter, the transmitter includes a pressure sensor configured to detect pressure of a tire. The specified bits correspond to the error detection code of pressure data. The error detection code of the pressure data is pressure mirror data obtained by inverting bits of the pressure data indicating pressure detected by the pressure sensor.

In accordance with the above transmitter, the specified bits correspond to the identification information.

In another general aspect, the receiver is configured to receive transmission data transmitted from the transmitter attached to each of wheel assemblies of the vehicle. The receiver includes a receiver storage configured to store identification information of the transmitter and a receiver control unit. The transmission data is data obtained by adding, to specified bits of the pre-transmission data generated in a predetermined frame format, the data that is not included in the predetermined frame format. The pre-transmission data is equal in data length to the transmission data. The receiver control unit is configured to restore the data that is not included in the frame format from the identification information stored in the receiver control unit or from the transmission data.

The receiver control unit restores the data not included in the frame format from the transmission data. This allows the receiver control unit to obtain the data that is not included in the frame format in addition to the data included in the transmission data. Thus, the data obtained by the receiver control unit increases without increasing the data length of the transmission data. This allows the data length of the transmission data to be shorter than when transmitting transmission data with the data that is not included in the frame format. Thus, the electric energy consumption of the transmitter does not increase.

In accordance with the above transmitter, the data that is not included in the frame format is the wheel position determination data used to perform the wheel position determination for determining which of the wheel assemblies the transmitter is attached to. The receiver control unit is configured to perform the wheel position determination with the wheel position determination data.

In accordance with the above transmitter, the receiver control unit is configured to calculate a difference between the error detection code processed from the transmission data and the error detection code included in the transmission data as the data that is not included in the frame format, or process mirror data of the pressure data included in the transmission data from the pressure data and calculate a difference between the calculated mirror data and pressure mirror data included in the transmission data as the data that is not included in the frame format.

In accordance with the above transmitter, the receiver control unit is configured to calculate a difference between the identification information stored in the receiver storage and the identification information included in the transmission data as the data that is not included in the frame format.

In a further general aspect, the transmitting-receiving system includes the transmitter attached to each of wheel assemblies of the vehicle and configured to transmit the transmission data to the receiver. The receiver is configured to receive the transmission data. The transmitter includes the power source, the transmitter storage configured to store the identification information of the transmitter, and the transmitter control unit. The transmitter control unit is configured to generate the pre-transmission data in the predetermined frame format. The pre-transmission data is equal in data length to the transmission data. The transmitter control unit is configured to transmit, as the transmission data, the data obtained by adding data that is not included in the frame format to the specified bits of the pre-transmission data. The receiver includes the receiver storage configured to store the identification information. The receiver control unit is configured to restore the data that is not included in the frame format from the identification information stored in the receiver control unit or from the transmission data.

The transmitter control unit transmits, as the transmission data, the data obtained by adding the data that is not included in the frame format to the specified bits of the pre-transmission data. The receiver restores the data that is not included in the frame format from the transmission data. This allows the data length of the transmission data to be shorter than when transmitting the transmission data with the data that is not included in the frame format. Thus, the electric energy consumption of the transmitter does not increase.

In a further general aspect, the wheel position determination method determines, with the receiver, to which one of wheel assemblies of the vehicle a transmitter is attached to. The wheel position determination method includes generating pre-transmission data in the predetermined frame format with the transmitter, the pre-transmission data being equal in data length to transmission data, transmitting, as the transmission data with the transmitter, data obtained by adding the wheel position determination data to the specified bits of the pre-transmission data to have the receiver perform wheel position determination, the receiver restoring the wheel position determination data from the identification information of the transmitter or from the transmission data, and the receiver performing wheel position determination to determine from the wheel position determination data to which one of the wheel assemblies the transmitter is attached.

The transmitter transmits, as the transmission data, data obtained by adding the data that is not included in the frame format to specified bits of the pre-transmission data. The receiver restores the data that is not included in the frame format from the transmission data. This allows the data length of the transmission data to be shorter than when transmitting transmission data with the data that is not included in the frame format. Thus, the electric energy consumption of the transmitter does not increase.

### BRIEF DESCRIPTION OF DRAWINGS

[Fig. 1] Fig. 1 is a schematic diagram showing an example of a transmitting-receiving system.
[Fig. 2] Fig. 2 is a diagram showing an anti-lock braking system of a vehicle that is provided with the transmitting-receiving system shown in Fig. 1.
[Fig. 3] Fig. 3 is a schematic diagram of the transmitter shown in Fig. 1.
[Fig. 4] Fig. 4 is a flowchart illustrating a specific angle transmission process performed by a transmitter control unit shown in Fig. 3.
[Fig. 5] Fig. 5 is a diagram showing a frame format of pre-transmission data generated in the specific angle transmission process shown in Fig. 4.
[Fig. 6] Fig. 6 is a diagram showing wheel position determination data generated in the specific angle transmission process shown in Fig. 4.
[Fig. 7] Fig. 7 is a flowchart illustrating the wheel position determination process performed by a transmitter control unit shown in Fig. 1.
[Fig. 8] Fig. 8 is a diagram showing the deviation in pulse count values obtained in the wheel position determination process illustrated in Fig. 7.
[Fig. 9] Fig. 9 is a diagram showing an example of pressure data and pressure mirror data.
[Fig. 10] Fig. 10 is a diagram showing an example of wheel position determination data.
[Fig. 11] Fig. 11 is a diagram showing an example of a difference between pressure mirror data included in the transmission data and mirror data of the pressure data processed from the transmission data.
[Fig. 12] Fig. 12 is a diagram showing a frame format of pre-transmission data in a second embodiment.
[Fig. 13] Fig. 13 is a diagram showing an example of pre-transmission data in the second embodiment.
[Fig. 14] Fig. 14 is a diagram showing an example of a difference between error detection code included in transmission data and error detection code processed from the transmission data.
[Fig. 15] Fig. 15 is a diagram showing an example of an ID code included in transmission data in a third embodiment.
[Fig. 16] Fig. 16 is a diagram showing an example of transmission data in the third embodiment.
[Fig. 17] Fig. 17 is a diagram showing error detection codes processed using ID codes registered in a receiver.
[Fig. 18] Fig. 18 is a diagram showing an example of a difference between an ID code included in transmission data and an ID code registered in the receiver.

### DESCRIPTION OF EMBODIMENTS

### [First Embodiment]

A transmitter, a receiver, a transmitting-receiving system, and a wheel position determination method in accordance with a first embodiment will now be described.

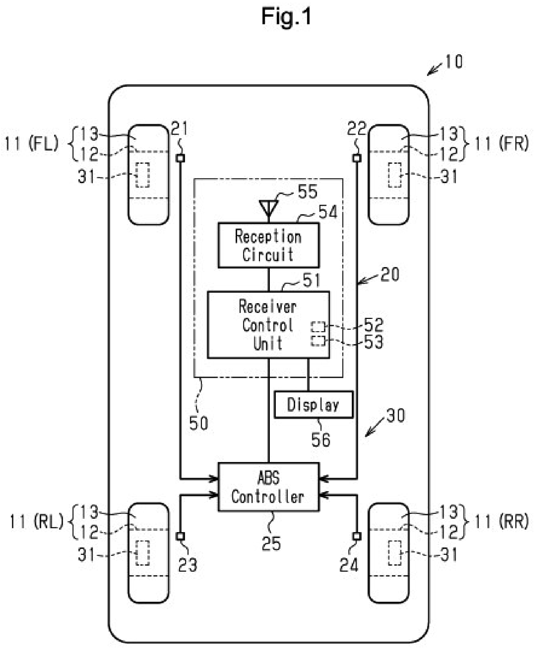

As shown in Fig. 1, a transmitting-receiving system 30 is installed in a vehicle 10.

The vehicle 10 includes four wheel assemblies 11. Each wheel assembly 11 includes a wheel 12 and a tire 13 attached to the wheel 12. Among the wheel assemblies 11, a right front wheel assembly will be denoted by FR, a left front wheel assembly will be denoted by FL, a right rear wheel assembly will be denoted by RR, and a left rear wheel assembly will be denoted by RL.

The vehicle 10 includes an anti-lock braking system (ABS) 20. The ABS 20 includes an ABS controller 25 and rotation sensor units 21, 22, 23, and 24 respectively corresponding to the wheel assemblies 11. The first rotation sensor unit 21 corresponds to the left front wheel assembly FL, and the second rotation sensor unit 22 corresponds to the right front wheel assembly FR. The third rotation sensor unit 23 corresponds to the left rear wheel assembly RL and the fourth rotation sensor unit 24 corresponds to the right rear wheel assembly RR. The ABS controller 25 includes a microcomputer or the like and obtains the rotation angle of each wheel assembly 11 based on signals from the rotation sensor units 21 to 24.

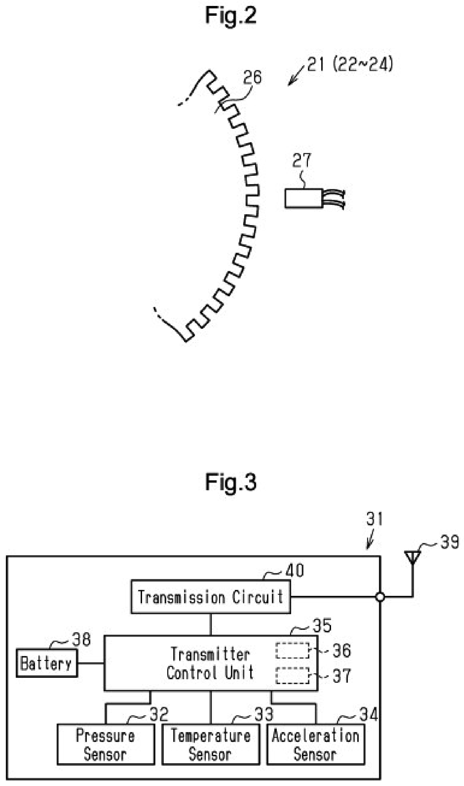

As shown in Fig. 2, each of the rotation sensor units 21 to 24 includes a gear 26 that rotates integrally with the corresponding wheel assembly 11, and a detector 27 that is arranged to face the outer circumferential surface of the gear 26. The gear 26 includes 48 teeth arranged at equal angular intervals on the outer circumferential surface of the gear 26. The detector 27 detects pulses generated as the gear 26 rotates. The ABS controller 25, which is connected by a wire to the detector 27, determines a rotation angle of each wheel assembly 11 based on a pulse count value that is a detection value of each detector 27. More specifically, the ABS controller 25 counts rising edges and falling edges of the pulses generated by the detector 27. The ABS controller 25 divides the number of counted pulses by 96, which is the number of pulses for one rotation of the gear 26, and uses the remainder as a pulse count value. Further, 360 degrees is divided by the number of pulses generated in the detector 27 during one rotation of the wheel assembly 11 to obtain the degree the gear 26 rotates over one pulse count value. Thus, the rotation angle of the wheel assembly 11 may be obtained from the pulse count value. The pulse count value ranges from 0 to 95.

### <Transmitting-Receiving System>

As shown in Fig. 1, a transmitting-receiving system 30 includes a transmitter 31 attached to each wheel assembly 11, and a receiver 50 arranged in the vehicle 10. The transmitter 31 is attached to the wheel assembly 11 so as to be arranged in the space inside the tire 13. The transmitter 31 may be fixed to a tire valve, the wheel 12, or the tire 13. The transmitter 31 detects the condition of the corresponding tire 13 and wirelessly transmits transmission data, including detected information of the tire 13, to the receiver 50. The transmitting-receiving system 30 receives the transmission data, which is transmitted from the transmitter 31 to the receiver 50, in order to monitor the condition of the tire 13. The transmitting-receiving system 30 is a tire condition monitoring system.

### <Transmitter>

As shown in Fig. 3, each transmitter 31 includes a pressure sensor 32, a temperature sensor 33, an acceleration sensor 34, a transmitter control unit 35, a battery 38, a transmission antenna 39, and a transmission circuit 40. The transmitter 31 is driven by electric power supplied from the battery 38. The transmitter control unit 35 centrally controls the operation of the transmitter 31. The battery 38, which is the power source of the transmitter 31, may be a primary battery or a power storage device such as a rechargeable battery or a capacitor.

The pressure sensor 32 detects the air pressure of the corresponding tire 13. The temperature sensor 33 detects the temperature of the corresponding tire 13.

The acceleration sensor 34 is attached so as to detect centrifugal acceleration. The acceleration sensor 34 includes a detection axis and detects acceleration in the direction of the detection axis. The acceleration sensor 34 is attached to the wheel assembly 11 so that the detection axis is oriented in the vertically downward direction when the transmitter 31 is located at the lowest position of the wheel assembly 11. The acceleration sensor 34 may be a single-axis acceleration sensor or a multi-axis acceleration sensor as long as it detects at least the centrifugal acceleration.

The transmitter control unit 35 includes a processor 36 and a transmitter storage 37. The processor 36 is, for example, a central processing unit (CPU), a graphics processing unit (GPU), or a digital signal processor (DSP). The transmitter storage 37 includes a random-access memory (RAM) and a read-only memory (ROM). The transmitter storage 37 stores program codes or instructions to cause the processor to execute processes. The transmitter storage 37, namely, a computer-readable medium, includes any available medium that is accessible by general-purpose computers or dedicated computers. The transmitter control unit 35 may include a hardware circuit, such as an application-specific integrated circuit (ASIC), a field-programmable gate array (FPGA), or the like. The transmitter control unit 35, which is processing circuitry, may include one or more processors that operate according to computer programs, one or more hardware circuits such as an ASIC or a FPGA, or a combination of the above.

Each transmitter storage 37 stores ID code indicating identification information that is unique to the transmitter 31. The ID code of the transmitter 31 attached to the left front wheel assembly FL is FLID, the ID code of the transmitter 31 attached to the right front wheel assembly FR is FRID, the ID code of the transmitter 31 attached to the left rear wheel assembly RL is RLID, and the ID code of the transmitter 31 attached to the right rear wheel assembly RR is RRID. The transmitter storage 37 stores various programs for controlling the transmitter 31.

The transmitter control unit 35 generates transmission data and outputs the generated transmission data to the transmission circuit 40. The transmission circuit 40 modulates the transmission data. The modulated transmission data is transmitted from the transmission antenna 39 as a wireless signal. The wireless signal is a signal including the transmission data. The wireless signal is a signal of a predetermined frequency band. The frequency band is, for example, an LF band, an MF band, an HF band, a VHF band, a UHF band, or a 2.4 GHz band.

The transmitter 31 performs a specific angle transmitting process that transmits transmission data when the rotation angle of the wheel assembly 11 becomes a predetermined specific angle. The specific angle transmitting process may be performed, for example, when the vehicle 10 is stopped for a predetermined time or longer. The predetermined time is set to a time longer than the time required for changing the positions of the wheel assemblies 11 such as when performing tire rotation or the time required for changing a wheel assembly 11. The predetermined time is set to, for example, several tens of minutes to several hours.

The acceleration detected by the acceleration sensor 34 may be used to determine whether the vehicle 10 is traveling. The centrifugal acceleration acting on the acceleration sensor 34 increases as the vehicle speed increases. If the acceleration detected by the acceleration sensor 34 is greater than or equal to a travel determination threshold, the transmitter control unit 35 determines that the vehicle 10 is traveling. If the acceleration detected by the acceleration sensor 34 is less than the travel determination threshold, the transmitter control unit 35 determines that the vehicle 10 is stationary. The travel determination threshold is set, considering tolerance, to a value greater than the acceleration detected by the acceleration sensor 34 when the vehicle 10 is stationary.

The specific angle transmitting process will now be described.

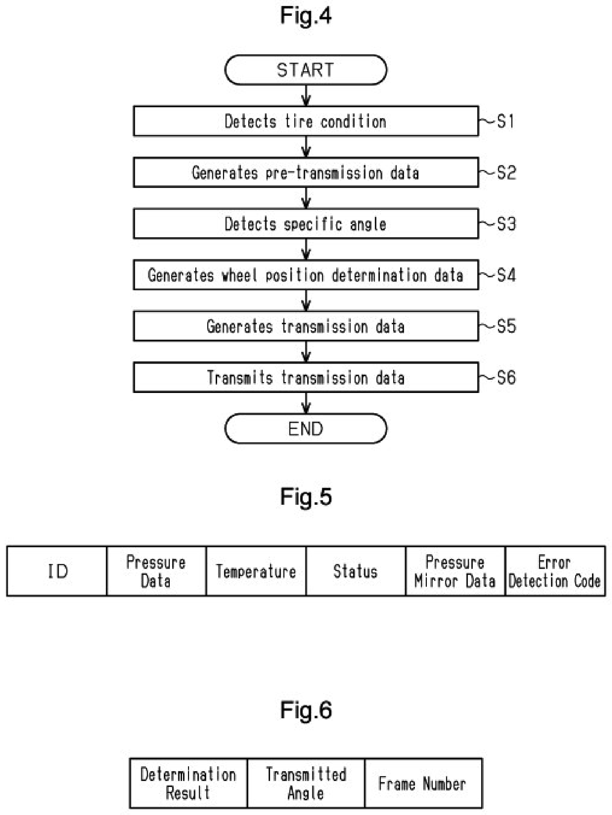

As shown in Fig. 4, in step S1, each transmitter control unit 35 detects the condition of each tire 13. More specifically, the transmitter control unit 35 obtains a detected result from the pressure sensor 32. The transmitter control unit 35 obtains a detected result from the temperature sensor 33. The condition of the tire 13 includes the pressure and the temperature of the tire 13.

Next, in step S2, the transmitter control unit 35 generates pre-transmission data. The pre-transmission data is generated in a predetermined frame format. As shown in Fig. 5, the frame format includes an ID code, pressure data, temperature data, status, pressure mirror data, and an error detection code. The frame format is used, for example, as the transmission data of a commercially available transmitter. The frame format may include a preamble.

An ID code is a code of the transmitter 31, which transmits the transmission data. The pressure data indicates the pressure detected by the pressure sensor 32. The temperature data indicates the temperature detected by the temperature sensor 33. The status indicates the condition of the transmitter 31. The pressure mirror data is data obtained by inverting bits of the pressure data. The pressure mirror data is used to check whether there is an error in the pressure data at the receiver 50. The pressure mirror data is an error detection code of the pressure data. The error detection code is processed from the data included in the frame format. The error detection code is, for example, a cyclic redundancy check (CRC) code. For example, the error detection code is the remainder obtained when the ID code, the pressure data, the temperature data, the status, and the pressure mirror data are divided by a generator polynomial. The transmitter control unit 35 generates pre-transmission data by storing data in the frame format.

Next, in step S3, the transmitter control unit 35 detects a specific angle by obtaining the detection result of the acceleration sensor 34. The centrifugal acceleration and gravitational acceleration act on the detection axis of the acceleration sensor 34. When taking only gravitational acceleration into account, gravitational acceleration always acts in the vertically downward direction. The direction of the detection axis changes as the wheel assembly 11 rotates. Thus, a gravitational acceleration component detected by the acceleration sensor 34 changes as the wheel assembly 11 rotates. Unless the vehicle 10 is being suddenly accelerated or suddenly stopped, the centrifugal acceleration changes only slightly during one rotation of the wheel assembly 11. Accordingly, the change in acceleration detected by the acceleration sensor 34 during one rotation of the wheel assembly 11 is substantially a change in the gravitational acceleration component resulting from a change in the direction of the detection axis.

When taking only gravitational acceleration into consideration, the gravitational acceleration component detected by the acceleration sensor 34 changes within a range between +1 G and -1 G during one rotation of the wheel assembly 11. The gravitational acceleration component detected when the detection axis is directed in the vertically downward direction is +1 G. The gravitational acceleration component detected when the detection axis is directed in the vertically upward direction, which is the direction opposite the vertically downward direction, is -1 G. When the wheel assembly 11 rotates and the acceleration sensor 34 moves across a position where the detection axis is directed in the vertically upward direction, the acceleration detected by the acceleration sensor 34 that was decreasing starts to increase. More specifically, when the position of the acceleration sensor 34 changes from the position where the detection axis is directed in the vertically downward direction to a position where the detection axis is directed in the vertically upward direction, the acceleration detected by the acceleration sensor 34 starts decreasing. In contrast, when the position of the acceleration sensor 34 changes from the position where the detection axis is directed in the vertically upward direction to a position where the detection axis is directed in the vertically downward direction, the acceleration detected by the acceleration sensor 34 starts increasing. The transmitter control unit 35 acquires the detection result of the acceleration sensor 34 at predetermined intervals. Each time a detection result of the acceleration sensor 34 is obtained, the transmitter control unit 35 compares the detection result with the preceding value. When the detection result of the acceleration sensor 34 is greater than the preceding value, this indicates that the acceleration is increasing. When the detection result of the acceleration sensor 34 is less than the preceding value, this indicates that the acceleration is decreasing. When the pattern in decrease and increase matches a predetermined pattern, the transmitter control unit 35 determines that the transmitter 31 is positioned at a specific angle of the wheel assembly 11. For example, when a detection result of the acceleration sensor 34 shifts from decreasing to increasing, the transmitter control unit 35 determines that the transmitter 31 is positioned at a specific angle. Accordingly, the transmitter control unit 35 detects that the transmitter 31 is positioned at the specific angle. In the present embodiment, the specific angles are set at two positions. The angle when the transmitter 31 located at the highest position in the wheel assembly 11 is 0°, and the specific angles are, for example, 0° and 180°. In other words, when the transmitter 31 is detected at the highest position of the wheel assembly 11 or when the transmitter 31 is detected at the lowest position of the wheel assembly 11, the transmission data is transmitted. The specific angle may be set at one position.

Next, in step S4, the transmitter control unit 35 generates wheel position determination data. As shown in Fig. 6, the wheel position determination data includes determination result data, transmitted angle data, and frame number data. The determination result data indicates whether a specific angle has been detected in step S3. The transmitted angle data indicates the specific angle. For example, when specific angles are set at multiple positions and transmission data is transmitted at each specific angle, the transmitted angle data indicates the specific angle at which the transmission data has been transmitted. The frame number data indicates how many times the occurrence of the frame transmission will be.

Next, in step S5, the transmitter control unit 35 generates transmission data. The transmission data is generated by adding wheel position determination data to specific bits of the pre-transmission data. In the present embodiment, the specific bits form the pressure mirror data. Accordingly, the pressure mirror data included in the transmission data is obtained by adding the wheel position determination data to the pressure mirror data of the pre-transmission data.

Next, in step S6, the transmitter control unit 35 transmits the transmission data. The transmission data is transmitted at the specific angle when the specific angle is detected.

### <Receiver>

As shown in Fig. 1, the receiver 50 includes a receiver control unit 51, a reception circuit 54, and a reception antenna 55. The receiver control unit 51 is connected to a display 56 installed in the vehicle 10.

The receiver control unit 51 includes a processor 52 and a receiver storage 53. The processor 52 is, for example, a CPU, a GPU, or a DSP. The receiver storage 53 includes a RAM and a ROM. The receiver storage 53 stores program codes or instructions for the processor to execute processes. The receiver storage 53, namely, a computer-readable medium, includes any available medium that is accessible by general-purpose computers or dedicated computers. The receiver control unit 51 may include a hardware circuit, such as an ASIC, FPGA, or the like. The receiver control unit 51, which is processing circuitry, may include one or more processors that operates in accordance with computer programs, one or more hardware circuits such as an ASIC or a FPGA, or a combination of the devices described above.

The reception circuit 54 demodulates wireless signals received from each transmitter 31 through the reception antenna 55, and outputs the transmission data from the transmitter 31 to the receiver control unit 51. Accordingly, the receiver control unit 51 obtains the transmission data.

The receiver control unit 51 obtains the pressure and the temperature of each tire 13, which represent the condition of the tire 13, based on the transmission data output from the reception circuit 54. When there is an anomaly in the tire 13, the receiver control unit 51 may display a warning on the display 56.

An ID code of each wheel assembly 11 is registered to the receiver 50. The ID code is registered by storing, in the receiver storage 53, the ID code of each transmitter 31 attached to the respective wheel assembly 11. This associates each transmitter 31 with the receiver 50.

There may be a need to determine which one of the four wheel assemblies 11 includes the tire 13 related with the received transmission data. For example, there may be a need to display on the display 56 which one of the four wheel assemblies 11 include the tire 13 that has a pressure abnormality, or display on the display the pressure of the tire 13 in correspondence with the position of its wheel assembly 11. In such cases, the wheel assembly 11 corresponding to the received transmission data needs to be determined. In other words, the receiver control unit 51 needs to associate the ID code of each transmitter 31 with the position of the corresponding wheel assembly 11.

### <Wheel Position Determination Process>

The wheel position determination process that determines the one of the four wheel assemblies 11 to which each transmitter 31 is attached will now be described. The wheel position determination process is performed, for example, when the vehicle 10 is activated by a start switch, which switches the state of the vehicle 10 between an activated state and a stopped state. The activated state of the vehicle 10 is a state in which the vehicle 10 can be driven by operating an accelerator pedal. The stopped state of the vehicle 10 is a state in which the vehicle 10 cannot be driven even if the accelerator pedal is operated.

The wheel position determination process will now be described.

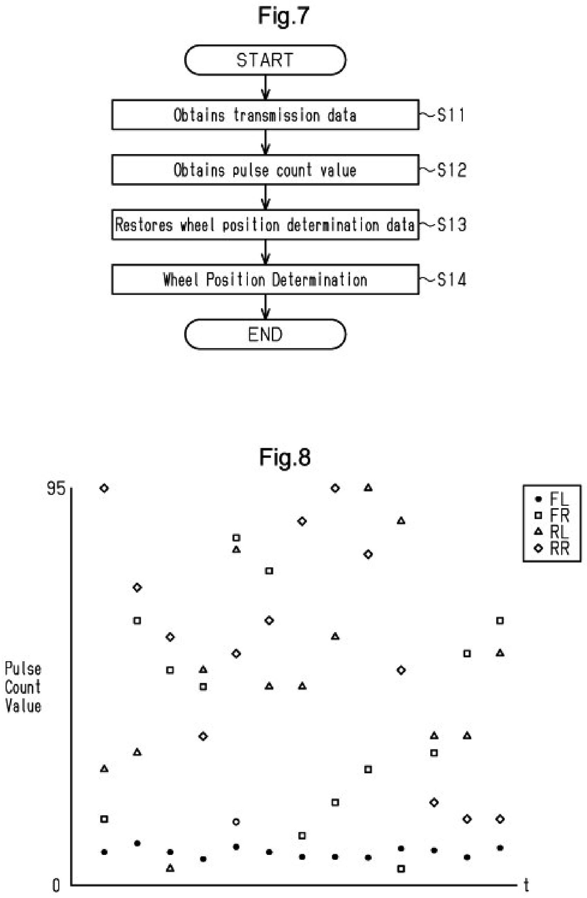

As shown in Fig. 7, in step S11, the receiver control unit 51 obtains the transmission data.

Next, in step S12, after obtaining the transmission data, the receiver control unit 51 obtains the pulse count value of each of the rotation sensor units 21 to 24 from the ABS controller 25.

Next, in step S13, the receiver control unit 51 restores the wheel position determination data. The receiver control unit 51 restores the wheel position determination data based on the transmission data. The receiver control unit 51 processes the mirror data of the pressure data in a manner similar to when processing the pressure mirror data of the pre-transmission data. The receiver control unit 51 obtains the pressure data from the transmission data. The receiver control unit 51 processes the mirror data of the pressure data by inverting the bits of the pressure data. The receiver control unit 51 uses the difference between the pressure mirror data included in the transmission data and the processed mirror data of the pressure data as the wheel position determination data. The receiver control unit 51 recognizes the specific angle from the wheel position determination data.

Next, in step S14, the receiver control unit 51 performs wheel position determination. The pulse count value associated with the ID code included in the transmission data is collected each time the transmission data is obtained. For each transmitter 31, the corresponding one of the rotation sensor units 21 to 24 will have the smallest deviation in pulse count values. The wheel assemblies 11 have different rotational speeds, for example, due to the effects of a differential gear, among other reasons. The relative position of the transmitter 31 attached to each wheel assembly 11 changes as the vehicle 10 travels. When a transmitter 31 is transmitting transmission data at a specific angle, transmission of the rotation angles of the four wheel assemblies 11 is synchronized with transmission of the rotation angle in the transmission data from one of the four transmitters 31.

The receiver control unit 51 identifies the one of the four wheel assemblies 11 to which each transmitter 31 is attached to based on the deviation in the pulse count values collected each time the transmission data is obtained.

For example, the pulse count values acquired from the rotation sensor units 21 to 24 having the FL ID may be as shown in Fig. 8. In the example shown in Fig. 8, the first rotation sensor unit 21 corresponding to the left front wheel assembly FL has the smallest deviation in the detected pulse count values. Therefore, the transmitter 31 having the FL ID is determined as being attached to the left front wheel assembly FL.

When the collected pulse count values are within a predetermined range, the receiver control unit 51 associates the rotation sensor units 21 to 24 that detected the pulse count values with the transmitter 31. The predetermined range is set by taking deviations in the pulse count values into account and is used to determine which one of the rotation sensor units 21 to 24 has a small deviation in the pulse count values.

The receiver control unit 51 identifies the wheel assemblies 11 including the transmitters 31 having the FL ID, FR ID, RL ID, and RR ID. Further, the receiver control unit 51 associates the four ID codes with the positions of the corresponding wheel assemblies 11, and stores the ID codes in the receiver storage 53. Steps S11 to S14 are repeated each time the transmission data is received until the corresponding relationship between all of the transmitters 31 and the wheel assemblies 11 are determined. When the four ID codes are associated with the positions of the wheel assemblies 11 through step S14, the receiver control unit 51 ends the wheel position determination process.

In the present embodiment, the specific angles are set at multiple positions. In this case, the specific angle at which the transmission data is transmitted has to be recognized. The receiver control unit 51 recognizes, from the restored wheel position determination data, the specific angle at which the transmission data was transmitted.

The receiver control unit 51 may collect the pulse count value at each specific angle, and determine the position of the wheel assembly at each specific angle. In this case, the determination result obtained at one of the specific angles may be used. Alternatively, the determination results that match at more than one specific angle may be used. Further, specific angles may be regarded as a single specific angle by adding a pulse count value corresponding to the difference between the specific angles. For example, when the specific angles are 0° and 180°, 48 may be added to or subtracted from the pulse count value when obtaining the transmission data transmitted at 180°. In the rotational direction of the wheel assembly 11, the pulse count value of 48 corresponding to 180° may be referred to as the specific angle of 0° when performing the wheel position determination.

As described above, in the transmitting-receiving system 30, the transmitter control unit 35 performs the specific angle transmission process, and the receiver control unit 51 performs the wheel position determination process. Accordingly, the wheel position determination method is executed by the transmitter 31 and the receiver 50.

### [Operation of First Embodiment]

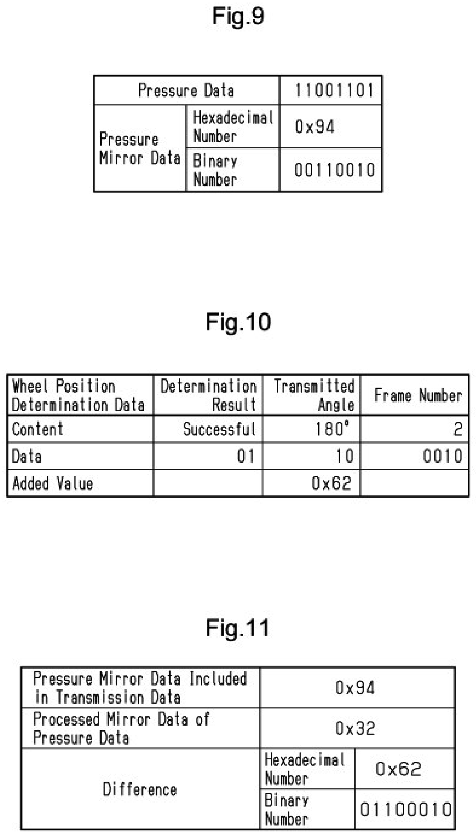

Fig. 9 shows values obtained as the pressure data and the pressure mirror data of the pre-transmission data. Fig. 9 shows the pressure data and the pressure mirror data shown in Fig. 9 are each represented by 8 bits. The pressure data is 11001101 in binary notation. The pressure mirror data is 00110010 in binary notation. Fig. 9 does not show the ID code, the temperature data, the status, and the error detection code.

Fig. 10 shows an example of the generated wheel position determination data. The wheel position determination data shown in Fig. 10 is represented by 8 bits. The upper two bits represent the determination result data, the lower four bits represent the frame number data, and the two bits between the determination result data and the frame number data represent the transmitted angle data. In the example shown in Fig. 10, the wheel position determination data is represented as 01100010 in binary notation. The determination result data of 01 indicates successful detection of the specific angle. The transmitted angle data of 10 indicates the specific angle of 180°. The frame number data of 0010 indicates the second frame.

In this case, the wheel position determination data represented by 0x62 in hexadecimal notation is added to the pressure mirror data of the pre-transmission data represented by 0x32 in hexadecimal notation. Accordingly, the pressure mirror data of the transmission data becomes 0x94. The transmitter 31 transmits the transmission data in which the pressure mirror data is represented by 0x94.

The receiver 50 receives the transmission data. The pre-transmission data and the transmission data have the same pressure data. Thus, the receiver control unit 51 processes the mirror data of the pressure data from the received transmission data. As shown in Fig. 11, the mirror data of the pressure data processed by the receiver control unit 51 is represented by 0x32. Since the pressure mirror data included in the transmission data is represented by 0x94, the difference is 0x62. The receiver control unit 51 obtains the wheel position determination data represented by 0x62. The binary number of 0x62 is 01100010. This indicates that the wheel position determination data generated in the transmitter control unit 35 has been restored. The receiver control unit 51 performs the wheel position determination using the wheel position determination data. More specifically, the wheel position determination is performed by collecting the pulse count value at each specified angle recognized from the wheel position determination data.

### [Advantages of First Embodiment]

(1-1) The transmitter control unit 35 transmits transmission data obtained by adding data that is not included in the frame format of the pre-transmission data, to the specified bits of the pre-transmission data. The receiver control unit 51 obtains the data, which is not included in the frame format, by restoring the data, which is not included in the frame format from the transmission data. Accordingly, the data length of the transmission data is shorter than when the transmission data is formed by adding the data, which is not included in a frame format, to the pre-transmission data as additional bits. This reduces the power consumption of the transmitter 31 and extends the life of the battery 38.

(1-2) The wheel position determination data is not included in the frame format. The transmitter 31 transmits the wheel position determination data to the receiver 50 without increasing the data length of the transmission data.

In order to add the functionality of the specific angle transmitting process to the conventional transmitter 31, the wheel position determination data has to be added to the frame format used by the conventional transmitter 31. This increases the data length of the transmission data and increases power consumption. Further, there would be a need to obtain radio wave certification again. In contrast, in the embodiment, the wheel position determination data is added to existing specified bits of the transmission data. Thus, the data length of the transmission data is not changed. This allows the receiver 50 to acquire the wheel position determination data without changing the frame format used by the conventional transmitter 31. Accordingly, there is no need to obtain radio wave certification again.

(1-3) The specified bits to which the data that is not included in the frame format is added is the pressure mirror data. The pressure mirror data is processed from the pressure data included in the transmission data. Such data can be readily restored at the receiver 50.

(1-4) The receiver control unit 51 restores the data that is not included in the frame format from the transmission data. This allows the data, which is not included in the frame format, to be obtained in addition to the data included in the transmission data. The amount of data obtained by the receiver control unit 51 is increased without increasing the data length of the transmission data. Since the data length of the transmission data is not increased, the power consumption of the transmitter 31 will not increase. Accordingly, the life of the battery 38 is extended.

(1-5) The receiver control unit 51 performs the wheel position determination with the restored wheel position determination data. This determines the wheel assembly 11 to which each transmitter 31 is attached.

(1-6) The receiver control unit 51 processes the mirror data of the pressure data from the pressure data included in the transmission data, and processes the difference between the processed mirror data and the pressure mirror data that is included in the transmission data as the data that is not included in the frame format. The pressure data is included in the transmission data. This allows the receiver control unit 51 to process the mirror data of the pressure data. The pressure mirror data included in the transmission data is obtained by adding the data that is not included in the frame format of the pressure mirror data to the pressure mirror data of the pre-transmission data. Thus, the difference obtained in the manner described above is processed as the data that is not included in the frame format.

### [Second Embodiment]

A second embodiment of the transmitter, the receiver, the transmitting-receiving system, and the wheel position determination method will now be described. In the second embodiment, the processes executed by the transmitter and the receiver are different. Hardware structures of the transmitter and the receiver are the same as the first embodiment.

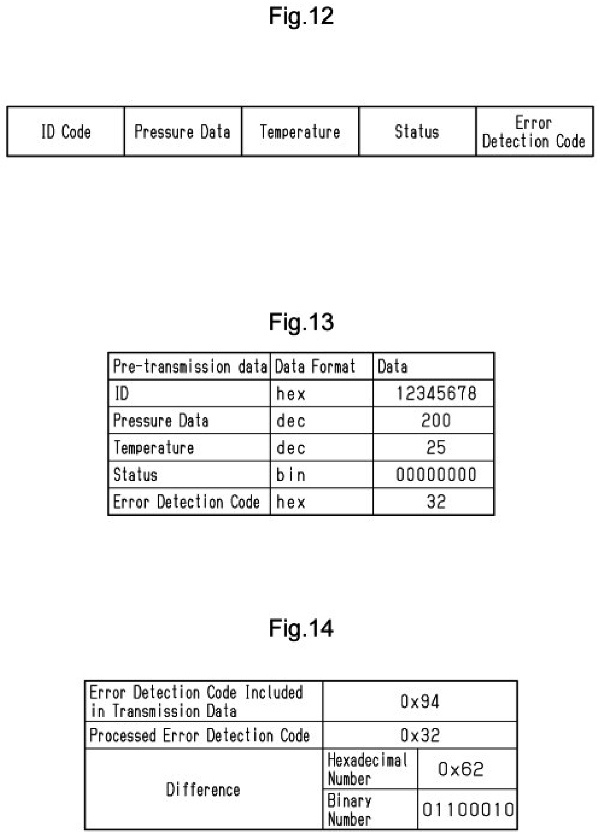

In the second embodiment, the transmitter control unit 35 performs steps S1 to S6. As shown in Fig. 12, the frame format used to generate the pre-transmission data in step S2 includes the ID code, the pressure data, the temperature data, the status, and the error detection code. The error detection code is, for example, the remainder when the ID code, the pressure data, the temperature data, and the status are divided by the generator polynomial. Steps S1 to S4 and S6 are the same as the corresponding steps in the first embodiment except in that the frame format of the pre-transmission data in step S2 is different.

In step S5, the transmitter control unit 35 generates transmission data by adding the wheel position determination data to the error detection code of the pre-transmission data. In the second embodiment, specified bits form the error detection code. Accordingly, the error detection code included in the transmission data is the data obtained by adding the wheel position determination data to the error detection code of the pre-transmission data.

The receiver control unit 51 performs steps S11 to S14. In step S13, the receiver control unit 51 restores the wheel position determination data from the transmission data. The receiver control unit 51 processes the error detection code in the same manner as when processing the error detection code of the pre-transmission data. The receiver control unit 51 obtains the ID code, the pressure data, the temperature data, and the status from the transmission data. Such data is the same as that data used when the transmitter control unit 35 calculates the error detection code of the pre-transmission data. The receiver control unit 51 processes the remainder when the ID code, the pressure data, the temperature data, and the status are divided by the generator polynomial as the error detection code. The generator polynomial is the same as that used when processing the error detection code of the pre-transmission data. The receiver control unit 51 uses the difference between the error detection code included in the transmission data and the calculated error detection code as the wheel position determination data. The receiver control unit 51 determines the specific angle from the wheel position determination data. Steps S11, S12, and S14 are the same as the first embodiment.

### [Operation of Second Embodiment]

Fig. 13 is generated as the pre-transmission data. Here, "hex" indicates a hexadecimal number, "dec" indicates a decimal number, and "bin" refers to a binary number. When the ID code is represented by 12345678, the pressure is represented by 200 kPaG, the temperature is represented by 25°C, and the status is represented by 00000000, and the error detection code is represented by 32 in hexadecimal notation.

The data shown in Fig. 10 is generated as the wheel position determination data in the same manner as the first embodiment.

In this case, the wheel position determination data represented by 0x62 is added to the error detection code, which is represented by 0x32, of the pre-transmission data. Thus, the error detection code of the transmission data becomes 0x94. The transmitter 31 transmits the transmission data in which the error detection code is represented by 0x94.

The receiver 50 receives the transmission data. The pre-transmission data and the transmission data have the same ID code, pressure data, temperature data, and status. This allows the receiver control unit 51 to obtain the ID code, the pressure data, the temperature data, and the status from the received transmission data. Further, the error detection code is processed from the ID code, the pressure data, the temperature data, and the status included in the transmission data. As shown in Fig. 14, the error detection code processed by the receiver control unit 51 is 0x32. Since the error detection code included in the transmission data is 0x94, the difference is 0x62. The receiver control unit 51 obtains 0x62 as the wheel position determination data. In binary notation, 0x62 corresponds to 01100010. Accordingly, the wheel position determination data generated by the transmitter control unit 35 is restored. The receiver control unit 51 performs the wheel position determination using the wheel position determination data.

### [Advantages of Second Embodiment]

In addition to the advantages (1-1), (1-2), (1-4), and (1-5) of the first embodiment, the second embodiment has the following advantages.

(2-1) The specific bits to which the data that is not included in the frame format is added is the error detection code. The error detection code is processed from the data included in the transmission data. Thus, data is readily restored in the receiver 50.

(2-2) The receiver control unit 51 calculates the difference between the error detection code processed from the transmission data and the error detection code included in the transmission data as the data not included in the frame format. The transmission data includes the data used by the transmitter control unit 35 to process the error detection code of the pre-transmission data. This allows the receiver control unit 51 to process the error detection code. The error detection code included in the transmission data is obtained by adding the data that is not included in the frame format to the error detection code of the pre-transmission data. Thus, the difference calculated in the manner described above is processed as the data that is not included in the frame format.

### [Third Embodiment]

A third embodiment of the transmitter, the receiver, the transmitting-receiving system, and the wheel position determination method will now be described. In the third embodiment, the processes executed by the transmitter and the receiver differ from the second embodiment. Hardware structures of the transmitter and the receiver are the same as the first embodiment.

The transmitter control unit 35 performs steps S1 to S6. In step S5, the transmitter control unit 35 generates transmission data by adding the wheel position determination data to the ID code in the pre-transmission data. The specific bits of the third embodiment correspond to the ID code. Steps S1 to S4 and S6 are the same as the second embodiment.

The receiver control unit 51 performs steps S11 to S14. In step S13, the receiver control unit 51 restores the wheel position determination data from the ID code. The receiver control unit 51 processes the error detection code by using the ID code registered in the receiver 50, the pressure data, the temperature data, and the status that are included in the transmission data. The error detection code included in the transmission data is the error detection code of the pre-transmission data, that is, the error detection code processed using the ID code before the wheel position determination data is added. Thus, when processing the error detection code using the four ID codes registered to the receiver 50, the error detection code processed using one of the four ID codes matches the error detection code included in the transmission data. The receiver control unit 51 determines that the ID code used to process the error detection code that matches the error detection code included in the transmission data is the ID code of the transmission source of the transmission data. The receiver control unit 51 processes the difference between the ID code of the transmission source, which is one of the ID codes registered in the receiver 50, and the ID code included in the transmission data as the wheel position determination data. Steps S11, S12, and S14 are the same as the second embodiment.

### [Operation of Third Embodiment]

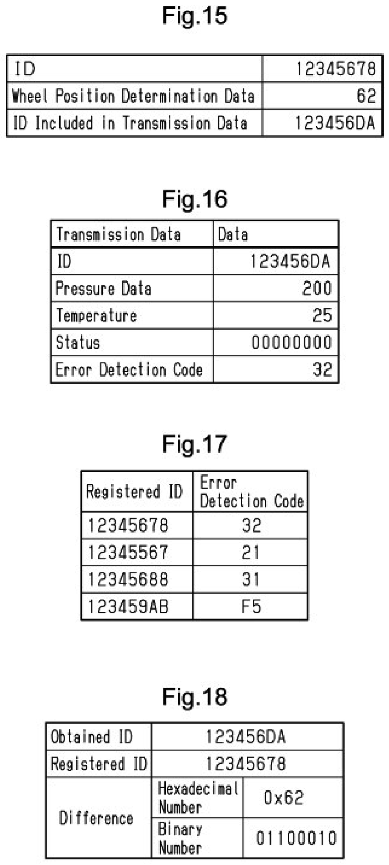

As shown in Fig. 15, the ID code of the transmitter 31 transmitting the transmission data is represented by 12345678 in hexadecimal notation. The wheel position determination data is represented by 62 in hexadecimal notation. In this case, the ID code included in the transmission data is represented by 123456DA. As shown in Fig. 16, the transmitter 31 transmits a transmission data in which the ID code is represented in hexadecimal notation by 123456DA, and the error detection code is represented in hexadecimal notation by 32.

The receiver 50 receives the transmission data. The pre-transmission data and the transmission data have the same pressure data, temperature data, status, and error detection code. Further, the ID code of the transmitter 31 is registered in the receiver 50. This allows the receiver control unit 51 to calculate the error detection code using the ID code registered in the receiver 50.

The number of the ID codes registered in the receiver 50 is at least the same as the number of the wheel assemblies 11. Further, an ID code of a transmitter 31 attached to a spare tire may also be registered. When the receiver control unit 51 calculates the error detection code using all of the registered ID codes, there will be an error detection code that matches the error detection code included in the transmission data. For example, as shown in Fig. 17, the four ID codes represented in hexadecimal notation by 12345678, 12345567, 12345688, and 123459AB are registered in the receiver 50. In this case, an error detection code processed from 12345678 is represented in hexadecimal notation by 32, an error detection code processed from 12345567 is represented in hexadecimal notation by 21, an error detection code processed from 12345688 is represented in hexadecimal notation by 31, and an error detection code processed from 123459AB is represented in hexadecimal notation by F5. In this manner, the error detection code processed from 12345678 matches the error detection code included in the transmission data. Accordingly, the ID code of the transmitter 31 that is the transmission source of the transmission data is 12345678.

As shown in Fig. 18, the receiver control unit 51 calculates the difference between 12345678, which is the ID code used to process the error detection code that matches the error detection code included in the transmission data, and 123456DA, which is the ID code included in the transmission data. The difference is 62 in hexadecimal notation. Accordingly, the wheel position determination data may be obtained as 62 in hexadecimal notation and 01100010 in binary notation.

### [Advantages of Third Embodiment]

In addition to the advantages (1-1), (1-2), (1-4) and (1-5) of the first embodiment, the third embodiment has the following advantage.

(3-1) The specific bits to which the data that is not included in the frame format is added corresponds to the ID code. The ID code is registered in the receiver 50. Thus, the ID code of the transmission source of the transmission data is obtained from the error detection code included in the transmission data and the error detection code processed from the registered ID code. Accordingly, the difference between the ID code included in the transmission data and the ID code of the transmission code is processed as the data that is not included in the frame format.

### [Modifications]

The above-described embodiments may be modified as follows. The above-described embodiments and the following modifications can be combined as long as the combined modifications remain technically consistent with each other.

In the first embodiment, the specific bits to which the data that is not included in the frame format is added may correspond to the error detection code.

In each embodiment, the data that is not included in the frame format and is added to the specified bits may correspond to any data. The data that is not included in the frame format may be an angle advanced from the detection of the specific angle at the time of transmitting the transmission data, or may be a delay time from the detection of the specific angle at the time of transmitting the transmission data. The data that is not included in the frame format may be reliability of the transmission data. The data that is not included in the frame format may be information related to the wheel assembly 11. Information related to the wheel assembly 11 is, for example, the size of the wheel assembly 11. The data that is not included in the frame format may be acceleration data, which indicates the acceleration detected by the acceleration sensor 34.

In the second embodiment, when the frame format includes an error correction code, the specified bits may correspond to the error correction code. In this case, the transmitter control unit 35 and the receiver control unit 51 may process the error correction code in the same manner as the error detection code in the second embodiment. The error correction code may be, for example, a Hamming code.

In each embodiment, the error detection code does not have to be a CRC code. For example, the error detection code may be a checksum.

In each embodiment, various types of power generating elements may be used as the power source of the transmitter 31. Even if a member that is capable of being charged or generating power is used as the power source, there is a limit to the amount of electric energy that can be used. Accordingly, it is preferable that the electric energy consumption by the transmission of transmission data be reduced.

In each embodiment, the vehicle 10 may include multiple wheel assemblies 11, and for example, the vehicle 10 may be a motorcycle.

In each embodiment, the receiver 50 may be a mobile terminal carried by an occupant of the vehicle 10.

In each embodiment, the wheel position determination data may include rotational direction data. The rotational direction data is data indicating whether the rotational direction of wheel assembly 11 is the clockwise direction or the counterclockwise direction.

### REFERENCE SIGNS LIST

10) vehicle; 11) wheel assembly; 13) tire; 30) transmitting-receiving system 31) transmitter; 32) pressure sensor; 35) transmitter control unit; 37) transmitter storage; 38) a battery as an example of power source; 50) receiver; 51) receiver control unit; 53) receiver storage.

## Claims

1. A transmitter attached to each of wheel assemblies of a vehicle and configured to transmit transmission data to a receiver, the transmitter comprising:
a power source;
a transmitter storage configured to store identification information of the transmitter; and
a transmitter control unit, wherein
the transmitter control unit is configured to generate pre-transmission data in a predetermined frame format, the pre-transmission data being equal in data length to the transmission data, and
the transmitter control unit is configured to transmit, as the transmission data, data obtained by adding data that is not included in the frame format to specified bits of the pre-transmission data.

2. The transmitter according to claim 1, wherein the data that is not included in the frame format is wheel position determination data used by the receiver to perform wheel position determination for determining which one of the wheel assemblies the transmitter is attached to.

3. The transmitter according to claim 1 or 2, wherein the specified bits correspond to an error detection code or an error correction code.

4. The transmitter according to claim 1 or 2, wherein
the transmitter includes a pressure sensor configured to detect pressure of a tire,
the specified bits correspond to an error detection code of pressure data, and
the error detection code of the pressure data is pressure mirror data obtained by inverting bits of the pressure data indicating pressure detected by the pressure sensor.

5. The transmitter according to claim 1 or 2, wherein the specified bits correspond to the identification information.

6. A receiver configured to receive transmission data transmitted from a transmitter attached to each of wheel assemblies of a vehicle, the receiver comprising:
a receiver storage configured to store identification information of the transmitter; and
a receiver control unit, wherein
the transmission data is data obtained by adding, to specified bits of pre-transmission data generated in a predetermined frame format, data that is not included in the predetermined frame format, the pre-transmission data being equal in data length to the transmission data, and
the receiver control unit is configured to restore the data that is not included in the frame format from the identification information stored in the receiver storage or from the transmission data.

7. The receiver according to claim 6, wherein
the data that is not included in the frame format is wheel position determination data used to perform wheel position determination for determining which of the wheel assemblies the transmitter is attached to, and
the receiver control unit is configured to perform the wheel position determination with the wheel position determination data.

8. The receiver according to claim 6 or 7, wherein
the receiver control unit is configured to
calculate a difference between an error detection code processed from the transmission data and an error detection code included in the transmission data as the data that is not included in the frame format, or
process mirror data of the pressure data included in the transmission data from the pressure data and calculate a difference between the calculated mirror data and pressure mirror data included in the transmission data as the data that is not included in the frame format.

9. The receiver according to claim 6 or 7, wherein the receiver control unit is configured to calculate a difference between the identification information stored in the receiver storage and the identification information included in the transmission data as the data that is not included in the frame format.

10. A transmitting-receiving system, comprising:
a transmitter attached to each of wheel assemblies of a vehicle and configured to transmit transmission data to a receiver, and
the receiver configured to receive the transmission data, wherein:
the transmitter includes
a power source,
a transmitter storage configured to store identification information of the transmitter, and
a transmitter control unit, wherein
the transmitter control unit is configured to generate pre-transmission data in a predetermined frame format, the pre-transmission data being equal in data length to the transmission data,
the transmitter control unit is configured to transmit, as the transmission data, data obtained by adding data that is not included in the frame format to specified bits of the pre-transmission data, and
the receiver includes
a receiver storage configured to store the identification information, and
a receiver control unit configured to restore the data that is not included in the frame format from the identification information stored in the receiver storage or from the transmission data.

11. A wheel position determination method for determining, with a receiver, to which one of wheel assemblies of a vehicle a transmitter is attached, the wheel position determination method comprising:
generating pre-transmission data in a predetermined frame format with the transmitter, the pre-transmission data being equal in data length to transmission data;
transmitting, as the transmission data with the transmitter, data obtained by adding wheel position determination data to specified bits of the pre-transmission data to have the receiver perform wheel position determination;
restoring, with the receiver, the wheel position determination data from identification information of the transmitter or from the transmission data; and
performing, with the receiver, the wheel position determination to determine from the wheel position determination data to which one of the wheel assemblies the transmitter is attached.
